# EUROPEAN PATENT APPLICATION

(11) **EP 3 805 032 A1**
(43) Date of publication of application: **14.04.2021**
(21) Application number: 20200682.1
(22) Date of filing: 08.10.2020
(51) Int. Cl.: B60K 15/05

(54) **DOOR WITH REDUCED VOLUME FOR OPENINGS IN WALLS OF VEHICLES**

(30) Priority: 11.10.2019 IT 201900018545
(71) Applicant: F.A.P. S.R.L., 50142 Firenze (IT)
(72) Inventor: ERMINI, Massimo, 50139 FIRENZE (IT)
(74) Representative: Savi, Massimiliano

(57) **Abstract**

The object of the invention is a door with reduced volume for openings in walls of vehicles, in particular for vehicles such as in particular, motor homes, trailers, mobile homes, boats, etc. The door comprises a containment body (50) and a cover (30) tilting between an opening position and a closing position of the aforesaid containment body (50), in which the tilting cover of the door is substantially coplanar, in closing position, with the wall (60) of the vehicle to which the door is applied.

## Description

### FIELD OF THE INVENTION

The object of the invention is a door with reduced volume for openings in walls of vehicles, in particular for vehicles such as motor homes, trailers, mobile homes, boats, etc.

### KNOWN PRIOR ART

It is known in the field of motor homes (or in the nautical field) that the walls of the vehicles often are made by means of composite materials, obtained by two stiff panels made of relatively lightweight material such as, for example aluminum (on the outside) and wood (on the inside), and a thick inner layer of insulating and lightweight material such as, for example polystyrene.

The openings made in the walls of this type in order to make, for example windows, doors, hatches and also openings for accessing electrical sockets or water or fuel tank fillers, are to deal with the structure of the walls which is relatively not very sturdy. For this reason, the openings are provided with covers, doors, which are applied externally to and protruding from the walls, fastened by screws adapted to engage with the whole thickness of the wall itself or at least with the outermost and most resistant layer, generally made of aluminum. Considering the particular application of such doors, the drawback generally given by such doors protruding externally from the body of the vehicle to which they are applied, is noted.

This fact may give rise to problems associated with the external volume of the door and also be the source of imperfections in appearance.

In addition to this, in the known art the fixing means of the doors applied to the walls made of composite material are external and this results in the risk of tampering and vandalism.

Therefore, it is an object of the present invention to overcome the drawbacks of the known art by means of a cover door for windows, doors, hatches, and also for openings for accessing electrical sockets or fuel or water tank fillers, etc. in vehicles in the field of motor homes or in the nautical field, which has an increased integration with the body of the vehicle to which it is applied and an improved appearance.

It is a further object of the present invention to obtain the aforesaid effect in a rational and affordable manner.

### BRIEF SUMMARY OF THE INVENTION

Therefore, the present invention aims to achieve the above-described objects by a cover door for windows, doors, hatches and openings for accessing electrical sockets or fuel or water tank fillers etc., where said door is applicable to a land, nautical or aeronautical vehicle. Said door comprises a containment body provided with a cover tilting between a first closing position of the aforesaid containment body and a second opening position of the aforesaid containment body, the aforesaid containment body being configured to allow the tilting cover of the door to be brought to the closing position flush with a composite-material wall of the vehicle to which said door is applied.

An advantage of such an embodiment is given by the door integrating flush with the wall of the vehicle to which it is applied, thus reducing or minimizing the volumes and improving the appearance.

A further advantage is given by the door according to the present description not requiring fixing means external to the composite-material wall on which said door is installed.

Further features of the invention can be inferred from the dependent claims.

### BRIEF DESCRIPTION OF THE DRAWINGS

Further features and advantages of the invention will be more apparent in light of the following detailed description, with the aid of the accompanying drawings, in which:
- Figure 1 is a sectional view of the door according to an embodiment of the invention, with the cover in closed position;

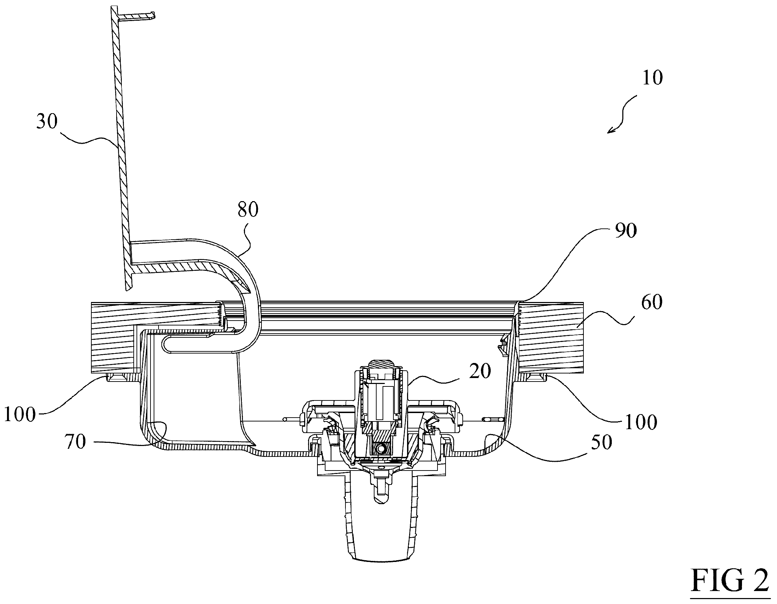

- Figure 2 is a sectional view of the door in Figure 1, with the cover in open position; and

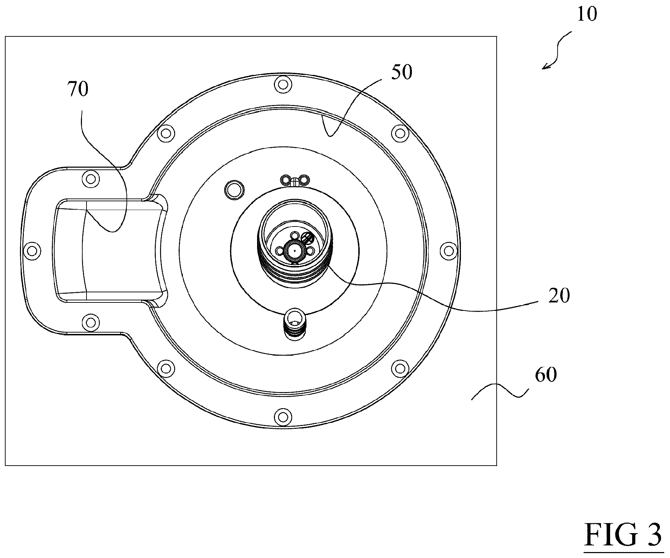

- Figure 3 shows a plan view of the rear side of the body of the door in Figure 1.

### DETAILED DESCRIPTION OF CERTAIN PREFERRED EMBODIMENTS OF THE PRESENT INVENTION

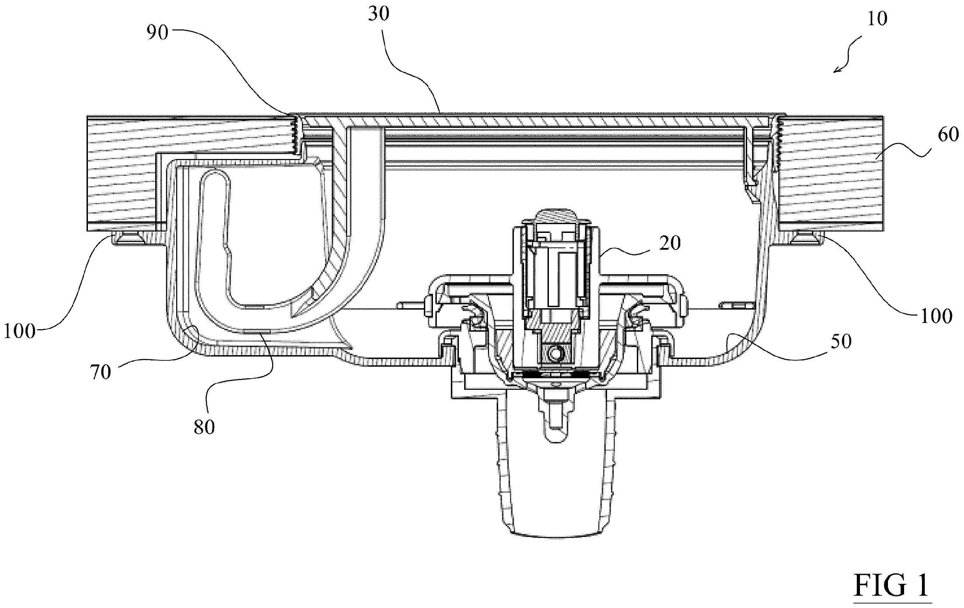

The invention is now described with initial reference to Figure 1, which shows a sectional view of the door according to an embodiment of the invention, with cover 30 in closed position, where the cover door is indicated as a whole by reference numeral 10.

According to the embodiment shown in accompanying Fig. 1, door 10 of the invention is adapted to cover a filler 20 of a tank, where said tank is placed on board vehicles such as motor homes, trailers, mobile homes, boats and other, and in general land, nautical or aeronautical vehicles.

In particular, door 10 comprises a containment body 50 and a cover 30 tilting between a first closing position of the containment body 50 and a second opening position of the containment body 50. Filler 20 is contained in said containment body 50.

Filler 20 is accessible in the opening position of the tilting cover of the door.

The tilting cover 30 is connected to a hinge 80 which allows the aforesaid opening and closing movements of the tilting cover 30.

According to an aspect of the invention, the containment body 50 of door 10 is adapted to be accommodated in a recess of the wall of the vehicle in which it is installed and is configured to allow the tilting cover 30 of the door 10, when it is in closing position, to be flush with said wall 60 of the vehicle to which said door 10 is applied.

The term "flush" in this context means that the outer surface of the tilting cover 30 of door 10 is substantially coplanar and not protruding with respect to wall 60 of the land, nautical or aeronautical vehicle to which said door 10 is applied.

The containment body 50 is provided with suitable means for fixing to the inner side of wall 60. Said fixing means are not accessible from the outside of the vehicle and are adapted to engage with the inner panel of the wall (for example, made of wood) and with at least part of the inner layer of insulating material (for example, made of polystyrene). These fixing means may be obtained by means of a flange provided with holes for accommodating screws, rivets or other similar means, or by means of a plurality of tongues 100 also provided with holes to accommodate screws, rivets or other similar means. Alternatively, said flange and the tongues might not have holes and may be configured to be fastened to the inner panel of the wall by means of glue, silicone or other similar sealants.

Said containment body 50 is further configured to contain a hinge 80 which allows the movement of the tilting cover 30 between the first closing position of the aforesaid containment body 50 and the second opening position of the aforesaid containment body 50, and vice versa. Hinge 80 in turn comprises at least one C-shaped arm connected to the tilting cover 30. Moreover, hinge 80 is contained in a housing 70 of the containment body 50.

Moreover, the containment body 50 may advantageously be provided with an edge 90 adapted to join said containment body 50 to the rim of the recess of the wall of the vehicle on which it is installed. In the first closing position, the aforesaid tilting cover 30 rests on said edge 90 so as to be substantially coplanar to the wall of the vehicle to which said door 10 is applied.

Said joining edge 90 may accommodate a seal adapted to favor a tight sealing of body 50 such as to provide the interior of door 30 with a certain degree of insulation with respect to the outside ambient.

Obviously, modifications or improvements dictated by contingent or particular reasons may be made to the invention as described, without departing from the scope of the invention as claimed below.

## Claims

1. A door (10) for an opening in a wall (60) of a vehicle made of a multilayer composite material, comprising a containment body (50) adapted to be accommodated inside a recess of the wall (60) of the vehicle and a cover (30) tilting between a first closing position of the containment body (50) and a second opening position of the containment body (50), said cover (30) being connected to said containment body (50) by means of a hinge (80) comprising at least one "C"-shaped arm adapted to be contained inside a housing (70) of the containment body (50) when the cover (30) is in the first closing position, so that the cover (30) is substantially coplanar and not protruding with respect to the wall (60) of the vehicle.

2. A door (10) according to claim 1, **characterized in that** said containment body (50) is provided with suitable means for fixing to the inner side of the wall (60) of the vehicle.

3. A door (10) according to claim 2, **characterized in that** said means for fixing to the inner side of the wall (60) of the vehicle comprise a flange.

4. A door (10) according to claim 2, **characterized in that** said means for fixing to the inner side of the wall (60) of the vehicle comprise a plurality of tongues (100).

5. A door (10) according to one or more of the claims from 3 to 4, **characterized in that** said flange and said tongues (100) are provided with holes adapted to receive screws, rivets or other similar fixing means.

6. A door (10) according to one or more of the claims from 1 to 5, **characterized in that** the containment body (50) is provided with an edge (90) adapted to join said containment body (50) to the rim of the recess of the wall (60) of the vehicle.

7. A door (10) according to claim 6, **characterized in that** said edge (90) accommodates a seal adapted to favor a tight sealing of the body (50) .
